# EUROPEAN PATENT APPLICATION

(11) **EP 4 836 468 A1**
(43) Date of publication of application: **04.11.2026**
(21) Application number: 23962935.5
(22) Date of filing: 29.12.2023
(51) Int. Cl.: H04W 8/22

(54) **CELL CONFIGURATION METHODS, COMMUNICATION DEVICE, AND STORAGE MEDIUM**

(71) Applicant: Beijing Xiaomi Mobile Software Co., Ltd., Beijing 100085 (CN)
(72) Inventor: ZHAO, Li, Beijing 100085 (CN)
(74) Representative: Stöckeler, Ferdinand
(86) International application number: PCT/CN2023/143633
(87) International publication number: WO 2025/138261

(57) **Abstract**

Provided in the embodiments of the present disclosure are cell configuration methods, a communication device, and a storage medium. A cell configuration method comprises: configuring the type of a first cell for a terminal on the basis of the capability of the terminal, wherein the type of the first cell configured for the terminal comprises a first type or a second type, a cell of the first type is a cell which does not send a synchronization signal and physical broadcast channel block (SSB) and/or does not send a system information block (SIB), and a cell of the second type is a cell which sends an SSB and/or an SIB on demand; and on the basis of the type of the first cell configured for the terminal, sending a first configuration of the first cell to the terminal.

## Description

### TECHNICAL FIELD

The present disclosure relates to the field of communication technology, and specifically to a cell configuration method, a communication device, and a storage medium.

### BACKGROUND

In order to reduce energy consumption at base stations and on the network side, network energy saving (NES) technology is proposed. NES limits transmission and reception of network devices in the time domain and increases their sleep time thus achieving energy saving.

For example, different NES technologies may correspond to different types of cells. These includes cells that do not transmit synchronization signals and (Physical Broadcast Channel, PBCH) block (SSBs) and/or system information block (SIB)-referred to as SSB/SIB-less cells- and/or cells that transmits SSBs and/or SIBs on demand.

### SUMMARY

Embodiments of the present disclosure provide a cell configuration method, a communication device, and a storage medium.

According to a first aspect of the embodiments of the present disclosure, a cell configuration method is provided, performed by a network device, including: configuring, according to a capability of a terminal, a cell type of a first cell for the terminal, in which the cell type of the first cell configured for the terminal includes a first type or a second type; a cell of the first type is a cell that does not send an SSB and/or does not send an SIB; and a cell of the second type is a cell that sends the SSB and/or the SIB on demand; and sending, according to the cell type of the first cell configured for the terminal, a first configuration of the first cell to the terminal.

According to a second aspect of the embodiments of the present disclosure, a cell configuration method is provided, performed by a terminal, including: receiving a first configuration sent by a network device, in which the first configuration is configured by the network device for the terminal according to a cell type of a first cell; the cell type of the first cell is configured according to a capability of the terminal; the cell type of the first cell configured for the terminal includes a first type or a second type; a cell of the first type is a cell that does not send an SSB and/or does not send an SIB; and a cell of the second type is a cell that sends the SSB and/or the SIB on demand.

According to a third aspect of the embodiments of the present disclosure, a network device is provided, including: a processing module, configured to configure, according to a capability of a terminal, a cell type of a first cell for the terminal, in which the cell type of the first cell configured for the terminal includes a first type or a second type; a cell of the first type is a cell that does not send an SSB and/or does not send an SIB; and a cell of the second type is a cell that sends the SSB and/or the SIB on demand; and a sending module, configured to send, according to the cell type of the first cell configured for the terminal, a first configuration of the first cell to the terminal.

According to a fourth aspect of the embodiments of the present disclosure, a terminal is provided, including: a receiving module, configured to receive a first configuration sent by a network device, in which the first configuration is configured by the network device for the terminal according to a cell type of a first cell; the cell type of the first cell is configured according to a capability of the terminal; the cell type of the first cell configured for the terminal includes a first type or a second type; a cell of the first type is a cell that does not send an SSB and/or does not send an SIB; and a cell of the second type is a cell that sends the SSB and/or the SIB on demand.

According to a fifth aspect of the embodiments of the present disclosure, a communication device is provided, including: one or more processors, in which the one or more processors are configured to invoke instructions to cause the communication device to perform the method provided by any technical solution of the first aspect to the second aspect.

According to a sixth aspect of the embodiments of the present disclosure, a storage medium for storing instructions is provided. When the instructions are running on a communication device, the communication device is caused to perform the method provided by any aspect of the first aspect to the second aspect.

According to the technical solution provided by the embodiments of the present disclosure, the cell type of the first cell is configured for the terminal according to the capability of the terminal, thus reducing a phenomenon that the terminal cannot access or camp on the first cell when the cell type configured by the network device for the terminal does not match the capability of the terminal.

It should be understood that the above general description and the following detailed description are exemplary and explanatory only, and do not limit the embodiments of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the embodiments of the present disclosure.
FIG. 1A is a schematic diagram illustrating an architecture of a communication system according to an embodiment.
FIG. 1B is a schematic diagram illustrating a master indication block (MIB) and a system information block (SIB) according to an embodiment.
FIG. 1C is a schematic diagram illustrating a resource location relationship pattern between a synchronization signal block (SSB) and a control resource set (CORESET) according to an embodiment.
FIG. 1D is an interaction diagram illustrating system information (SI) according to an embodiment.
FIG. 1E is a schematic diagram illustrating a medium access control (MAC) control element (CE) according to an embodiment.
FIG. 2 is a flowchart illustrating a cell configuration method according to an embodiment.
FIG. 3 is a flowchart illustrating a cell configuration method according to an embodiment.
FIG. 4 is a flowchart illustrating a cell configuration method according to an embodiment.
FIG. 5A is a block diagram illustrating a network device according to an embodiment.
FIG. 5B is a block diagram illustrating a terminal according to an embodiment.
FIG. 6A is a block diagram illustrating a communication device according to an embodiment.
FIG. 6B is a block diagram illustrating a chip according to an embodiment.

### DETAILED DESCRIPTION

The embodiments of the present disclosure provide a cell configuration method, a communication device, a communication system, and a storage medium.

According to a first aspect, a cell configuration method is provided, performed by a network device, including: configuring, according to a capability of a terminal, a cell type of a first cell for the terminal, in which the cell type of the first cell configured for the terminal includes a first type or a second type; a cell of the first type is a cell that does not send an SSB and/or does not send an SIB; and a cell of the second type is a cell that sends the SSB and/or the SIB on demand; and sending, according to the cell type of the first cell configured for the terminal, a first configuration of the first cell to the terminal.

Based on the above solution, according to the capability of the terminal, the cell type of the first cell is configured for the terminal, thus reducing a phenomenon that the terminal cannot access or camp on the first cell when the cell type configured by the network device for the terminal does not match the capability of the terminal.

In some embodiments in combination with the first aspect, in a case where the terminal has a first capability and does not have a second capability, configuring the cell type of the first cell as the first type, in which the first capability is a capability to camp on or access the cell of the first type; and the second capability is a capability to camp on or access the cell of the second type; or in a case where the terminal has a first capability and a second capability, configuring the cell type of the first cell as the first type or the second type.

Based on the above solution, if the terminal does not have the second capability, the cell type of the first cell may be configured as the first type; and if the terminal has the first capability and the second capability, the cell type of the first cell may be flexibly configured as the first type or the second type for the terminal.

In some embodiments in combination with the first aspect, in the case where the terminal has the first capability and the second capability, configuring the cell type of the first cell as the first type or the second type includes: in the case where the terminal has the first capability and the second capability, configuring the cell type of the first cell as the first type or the second type according to an expectation of the terminal.

In some embodiments in combination with the first aspect, in the case where the terminal has the first capability and the second capability, configuring the cell type of the first cell as the first type or the second type according to the expectation of the terminal includes at least one of: in a case where the terminal has the first capability and the second capability and the terminal expects to access or camp on the cell of the first type, configuring the cell type of the first cell as the first type; in a case where the terminal has the first capability and the second capability and the terminal expects to access or camp on the cell of the second type, configuring the cell type of the first cell as the second type; or in a case where the terminal supports the cell of the first type and supports the cell of the second type and the terminal expects to access or camp on the cell of the first type or the cell of the second type, configuring the cell type of the first cell as the first type or the second type according to a network configuration.

Based on the above solution, if the terminal supports the first capability and the second capability and expects to access or camp on a type of a cell, the cell type of the first cell may be configured for the terminal according to the expectation of the terminal. If the expectation of the terminal indicates a willingness to access the cell of the first type and the cell of the second type, the cell type of the first cell may be configured for the terminal according to the network configuration, thus meeting the needs of the network side.

In some embodiments in combination with the first aspect, the method further includes: receiving first information sent by the terminal, in which the first information indicates the capability of the terminal and/or an expectation of the terminal.

Based on the above solution, the terminal indicates the capability of the terminal and/or the expectation of the terminal by sending the first information, which has a feature of being simple to implement.

In some embodiments in combination with the first aspect, the method further includes: sending second information to the terminal, in which the second information is used for a change of the cell type of the first cell configured for the terminal.

Based on the above solution, the network device may change the cell type of the first cell configured for the terminal by sending the second information, thus meeting dynamic requirements of the terminal and/or the network device.

In some embodiments in combination with the first aspect, the second information includes at least one of: a first instruction, indicating the change of the cell type of the first cell; or a second configuration, in which the second configuration is a configuration of the first cell after the change of the cell type.

Based on the above solution, specific content of the second information may be the first instruction and/or the second configuration, and subsequently the network device may flexibly schedule as needed.

In some embodiments in combination with the first aspect, the first instruction is: downlink control information (DCI) or a first medium access control (MAC) control element (CE).

Based on the above solution, the first instruction may be DCI with good dynamics or an MAC CE that may be flexibly scheduled, which has a feature of being simple to implement.

In some embodiments in combination with the first aspect, the first MAC CE includes a bitmap; and a bit in the bitmap indicates a change of a cell type of a cell.

Based on the above solution, a specific composition of the first MAC CE is clarified, which has a feature of being simple to implement.

In some embodiments in combination with the first aspect, the first MAC CE has a first logical channel identifier; the first logical channel identifier is different from a second logical channel identifier of a second MAC CE; and the second MAC CE is different from the first MAC CE.

Based on the above solution, the first MAC CE is provided with the first logical channel identifier different from the first logical channel identifier of the second MAC CE, which may facilitate identification of an MAC CE between the network device and the terminal.

In some embodiments in combination with the first aspect, the cell type of the first cell is the first type, and the first configuration includes at least one of: a reference cell configuration, indicating a second cell referenced by the first cell; or a reference signal configuration, used by the terminal to determine timing of the first cell.

The above solution clarifies a specific composition of the first configuration, and the implementation is not limited to this composition.

In some embodiments in combination with the first aspect, the cell type of the first cell is the second type, and the first configuration includes: a request configuration, used by the terminal to request the SSB and/or the SIB from the first cell.

Based on the above solution, an example is given for a cell configuration of the first cell of the second type, and the implementation is not limited to this example.

In some embodiments in combination with the first aspect, the request configuration includes: information of a first random access preamble, in which the first random access preamble is used by the terminal to request the SSB and/or the SIB based on a random access request message.

Based on the above solution, the request configuration, via a configuration of the first random access preamble, facilitates the terminal to request the SSB and/or the SIB based on the random access request message.

According to a second aspect, a cell configuration method is provided, performed by a terminal, including: receiving a first configuration sent by a network device, in which the first configuration is configured by the network device for the terminal according to a cell type of a first cell; the cell type of the first cell is configured according to a capability of the terminal; the cell type of the first cell configured for the terminal includes a first type or a second type; a cell of the first type is a cell that does not send an SSB and/or does not send an SIB; and a cell of the second type is a cell that sends the SSB and/or the SIB on demand.

In some embodiments in combination with the second aspect, in a case where the terminal has a first capability and does not have a second capability, the cell type of the first cell is the first type; or in a case where the terminal has a first capability and does not have a second capability, the cell type of the first cell is the first type or the second type, in which the first capability is a capability to camp on or access the cell of the first type; and the second capability is a capability to camp on or access the cell of the second type.

In some embodiments in combination with the second aspect, in the case where the terminal has the first capability and does not have the second capability, the cell type of the first cell is configured according to an expectation of the terminal.

In some embodiments in combination with the second aspect, in a case where the terminal has the first capability and the second capability and the terminal expects to access or camp on the cell of the first type, the cell type of the first cell is the first type; in a case where the terminal has the first capability and the second capability and the terminal expects to access or camp on the cell of the second type, the cell type of the first cell is the second type; or in a case where the terminal has the first capability and the second capability and the terminal expects to access or camp on the cell of the first type or the cell of the second type, the cell type of the first cell is the first type or the second type.

In some embodiments in combination with the second aspect, the method further includes: sending first information to the network device, in which the first information indicates the capability of the terminal and/or an expectation of the terminal.

In some embodiments in combination with the second aspect, the method further includes: receiving second information sent by the network device, in which the second information indicates the capability of the terminal and/or an expectation of the terminal.

In some embodiments in combination with the second aspect, the second information includes at least one of: a first instruction, indicating a change of the cell type of the first cell; or a second configuration, in which the second configuration is a configuration of the first cell after a change of the cell type.

In some embodiments in combination with the second aspect, the first instruction is: DCI or a first MAC CE.

In some embodiments in combination with the second aspect, the first MAC CE includes a bitmap; and a bit in the bitmap indicates a change of a cell type of a cell.

In some embodiments in combination with the second aspect, the first MAC CE has a first logical channel identifier; the first logical channel identifier is different from a second logical channel identifier of a second MAC CE; and the second MAC CE is different from the first MAC CE.

In some embodiments in combination with the second aspect, the cell type of the first cell is the first type, and the first configuration includes at least one of: a reference cell configuration, indicating a second cell referenced by the first cell; or a reference signal configuration, used by the terminal to determine timing of the first cell.

In some embodiments in combination with the second aspect, the cell type of the first cell is the second type, and the first configuration includes: a request configuration, used by the terminal to request the SSB and/or the SIB from the first cell.

In some embodiments in combination with the second aspect, the request configuration includes: information of a first random access preamble, in which the first random access preamble is used by the terminal to request the SSB and/or the SIB based on a random access request message.

According to a third aspect, a network device is provided, including: a processing module, configured to configure, according to a capability of a terminal, a cell type of a first cell for the terminal, in which the cell type of the first cell configured for the terminal includes a first type or a second type; a cell of the first type is a cell that does not send an SSB and/or does not send an SIB; and a cell of the second type is a cell that sends the SSB and/or the SIB on demand; and a sending module, configured to send, according to the cell type of the first cell configured for the terminal, a first configuration of the first cell to the terminal.

According to a fourth aspect, a terminal is provided, including: a receiving module, configured to receive a first configuration sent by a network device, in which the first configuration is configured by the network device for the terminal according to a cell type of a first cell; the cell type of the first cell is configured according to a capability of the terminal; the cell type of the first cell configured for the terminal includes a first type or a second type; a cell of the first type is a cell that does not send an SSB and/or does not send an SIB; and a cell of the second type is a cell that sends the SSB and/or the SIB on demand.

According to a fifth aspect, the embodiments of the present disclosure provide a communication device, including: one or more processors, in which the processor is configured to invoke instructions to cause the communication device to perform the method described in the optional implementations of the first aspect to the second aspect.

According to a sixth aspect, the embodiments of the present disclosure provide a storage medium for storing instructions that, when running on a communication device, cause the communication device to perform the method described in the optional implementations of the first aspect to the second aspect.

According to a seventh aspect, the embodiments of the present disclosure provide a program product that, when executed by a communication device, causes the communication device to perform the method described in the optional implementations of the first aspect to the fifth aspect.

According to an eighth aspect, the embodiments of the present disclosure provide a computer program that, when running on a computer, causes the computer to perform the method described in the optional implementations of the first aspect to the fifth aspect.

It may be understood that the terminal, the network device, the communication system, the program product, and the computer program are all used to perform the methods provided by the embodiments of the present disclosure. Therefore, for achievable beneficial effects, reference may be made to the beneficial effects in the corresponding method, which are not repeated here.

The embodiments of the present disclosure provide a cell configuration method, a communication device, a communication system, and a storage medium. The embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In the embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, the terms such as "at least one of", "one or more", "a plurality of', "multiple", etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as a device included in the network (e.g., an access network device, a core network device, etc.).

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc. may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, the access network device, the core network device, or the network device may be replaced with the terminal. For example, various embodiments of the disclosure may also be applied to a structure in which communication between the access network device, the core network device, or the network device and the terminal is replaced with communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced with the language corresponding to the communication between the terminals (for example, "side"). For example, the uplink channel, the downlink channel, etc. may be replaced with the side channel, and the uplink, the downlink, etc. may be replaced with a sidelink.

In some embodiments, the terminal may be replaced with the access network device, the core network device, or the network device. In this case, the access network device, the core network device, or the network device may also be configured to have a structure that has all or part of functions of the terminal.

In some embodiments, the acquisition of data, information, etc. may comply with laws and regulations of the country to which the data is obtained.

In some embodiments, data, information, etc. may be obtained with consent from users.

In addition, each element, each row, or each column in the table of the embodiments of the disclosure may be implemented as an independent embodiment, and the combination of any elements, any rows, or any columns may also be implemented as an independent embodiment.

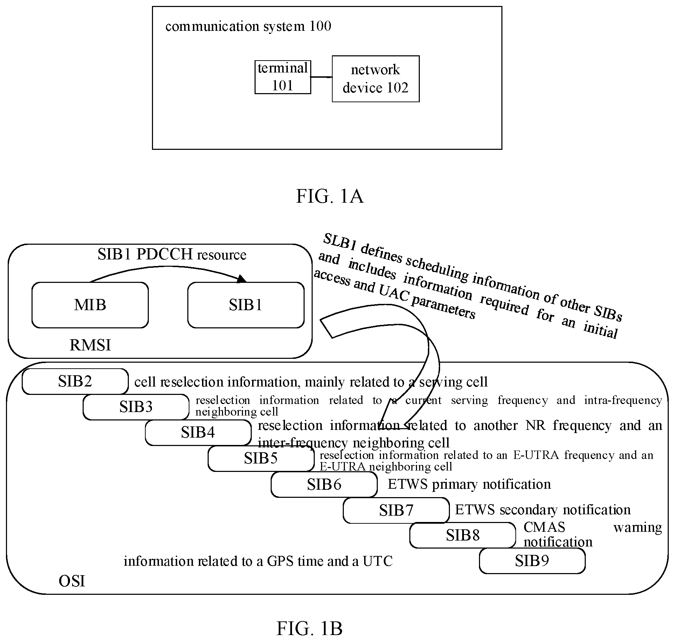

FIG. 1A is a schematic diagram illustrating an architecture of a communication system according to an exemplary embodiment.

As shown in FIG. 1A, a communication system 100 includes a terminal 101 and a network device 102. The network device 102 may include an access network device and/or a core network device.

In some embodiments, the terminal 101 includes, for example, at least one of a mobile phone, a wearable device, an Internet of Things (IoT) device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the terminal is also referred to as user equipment (UE).

In some embodiments, the access network device may be, for example, a node or device that connects the terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, or an access node in a wireless fidelity (Wi-Fi) system, which is not limited herein.

In some embodiments, the technical solution of the present disclosure may be applied to an architecture of the Open RAN. In this case, an interface between access network devices or within the access network device in the embodiments of the present disclosure may become an internal interface of the Open RAN. Processes and information interaction between these internal interfaces may be implemented via software or programs.

In some embodiments, the access network device may be composed of a central unit (CU) and distributed units (DUs). The CU may also be referred to as a control unit. The use of CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited herein.

In some embodiments, the core network device may be a device including the first network element, or may be a plurality of devices or device groups, each of which includes the first network element. The network element may be virtual or physical. The core network includes, for example, at least one of an evolved packet core (EPC), a 5G core network (5GCN), or a next generation core (NGC).

It may be understood that the communication system in the embodiments of the present disclosure is intended to illustrate the technical solution in the embodiments of the present disclosure more clearly, and does not constitute a limitation of the technical solution in the embodiments of the present disclosure. Those skilled in the art may know that the technical solution in the embodiments of the present disclosure is equally applicable to similar technical problems, with the evolution of a system architecture and the emergence of a new service scene.

The following embodiments of the present disclosure may be applied to the communication system 100, or to some entities shown in FIG. 1A. The entities may be in any number and in any form. Connection relationships between the entities are illustrative. The entities may be unconnected or may be connected. They may be connected in any manner, for example, they may be directly connected or indirectly connected, or may be connected via a wired or wireless way.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., the combination of LTE or LTE-A) may also be applied.

In some cases, IoT devices are typically powered by conventional batteries with a limited lifespan, which negatively impacts the user experience. A number of IoT devices will gradually show astronomical growth, and the emergence of a large number of IoT devices will push the maintenance expenditure including labor and battery costs to a new level. Billions of conventional batteries are discarded each year, and only a small part may be effectively recycled, which has a detrimental effect on the Earth's ecosystem. In some extreme environmental conditions, maintaining the operation of an IoT network and replacing batteries may be very challenging. In this regard, battery-free IoT communication is proposed, which may improve network performance and sustainability and expand application scenarios. In addition, battery-free communication is more environmentally friendly and safer for children and the elderly. By removing conventional batteries, the device size and cost may be significantly reduced, which paves the way for a variety of new applications.

In some embodiments, various low power wide area (LPWA) technologies are developed, such as machine type communication (MTC), narrow band Internet of Things (NB-IoT), reduced capability (Redcap), etc., to meet the growing demands of vertical fields. These LPWA technologies achieve low cost, low power consumption, and large-scale connectivity, and may meet the requirements of many applications. However, there are still many use cases and applications that may not be addressed in the following situations. First, battery-powered devices are not suitable, for example, under extreme environmental conditions (e.g., high voltage, extremely high/low temperature, humid environment). Second, maintenance-free devices (e.g., conventional batteries that do not require device replacement) are required. Finally, ultra-low complexity, a very small device size/form factor (e.g., with a thickness in millimeters), a longer life cycle, etc. are required. The ambient IOT device is a promising technology that may meet the above unmet needs. The ambient IOT device is an IoT device powered by energy harvesting, which is battery-free or with a limited energy storage capability (e.g., using a capacitor), and provides energy by harvesting radio waves, light, motion, heat, or any other suitable power source.

Energy harvested from the environment may drive sensing node data transmission and wireless communication. The transmission and reception power consumption of current mainstream low-power IoT communication chips (such as BLE, LoRa, NB-IoT) ranges from tens of milliwatts to several hundred milliwatts, while energy harvested from ambient energy is only on the order of microwatts, which may not drive these types of nodes to work. Therefore, a new wireless communication technology is needed to reduce the communication energy consumption to below tens of microwatts or even ten microwatts. The current mainstream method is to use backscatter communication technology. The backscatter communication is one of the key technologies for building a green, energy-saving, low-cost, and flexibly deployable future IoT, and is an important means to achieve "intelligent Internet of Everything (IIoE)". The method that may be adopted includes backscatter communication technology.

For network energy saving, the network device proposes SSB/SIB-less cells and cells that transmit an SSB and/or SIB based on an on-demand mechanism.

In some embodiments, the SSB/SIB-less cell does not transmit the SSB and/or SIB.

In some embodiments, the SSB/SIB-less cell does not transmit the SSB and/or SIB.

In some embodiments, the cell that transmits the SSB and/or SIB based on the on-demand mechanism transmits the SSB and/or SIB according to network side requirements and/or terminal requirements.

Content that a cell broadcasts in a new radio (NR) system may include: MIB, SIB1, and other system information (OSI). Remaining minimum system information (RMSI) may include at least the SIB1.

In some embodiments, the RMSI may include the MIB and the SIB1.

As shown in FIG. 1B, the MIB may include configuration information of the SIB1. For example, the MIB includes configuration information of a scheduling resource. The scheduling resource may include a physical downlink control channel (PDCCH) resource. DCI transmitted on the PDCCH resource is used for scheduling the SIB1. The SIB1 may also be used for configuring scheduling resources of OSI. In some embodiments, the SIB1 may also include information required for accessing a corresponding cell and unified access control (UAC) parameters, etc.

For example, an SIB2 may include cell reselection information. The cell reselection information is mainly related to a serving cell.

For example, an SIB3 may include reselection information related to a current serving frequency and an intra-frequency neighboring cell.

For example, an SIB4 may include reselection information related to another NR frequency and an inter-frequency neighboring cell.

For example, an SIB5 may include reselection information related to an evolved-universal mobile telecommunications system (UMTS) terrestrial radio access (E-UTRA) frequency and an E-UTRA neighboring cell.

For example, an SIB6 may include an emergency telecommunications warning system (ETWS) primary notification.

For example, an SIB7 may include an ETWS secondary notification.

For example, an SIB8 may include a commercial mobile alert system (CMAS) warning notification.

For example, an SIB9 may include information related to a positioning system time and a universal time.

In some embodiments, the SIB1 may include: a cell selection configuration, a cell access configuration, an OSI scheduling configuration and/or cell common configuration, configuration parameters related to access control, and/or configuration parameters related to a cell capability.

In some embodiments, a control resource set (CORESET) of the RMSI is configured by the MIB. There are at least three resource location relationships between the CORESET of the RMSI and the SSB. The CORESET includes one or more PDCCH resources. A physical downlink shared channel (PDSCH) may be used to transmit the SIB.

The terminal may obtain a resource location of the PDCCH according to a physical broadcast channel (PBCH) in the SSB, and further monitor DCI based on the resource location of the PDCCH. According to scheduling of monitored DCI, the RMSI is received.

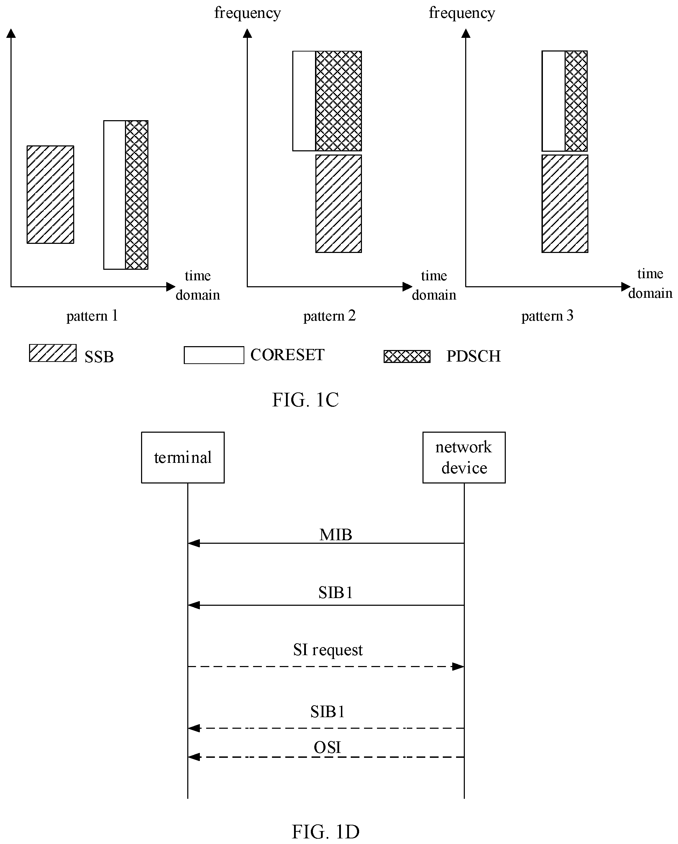

FIG. 1C shows patterns of the CORESET and the SSB of a communication system in different multiplexing modes.

Pattern 1 is used for a communication system of time division multiplexing (TDM). Pattern 2 is used for a communication system of TDM and frequency division multiplexing (FDM). Pattern 3 is used for a communication system of FDM.

In some embodiments, for network energy saving (NES), system information sent by the network side is reduced.

In some embodiments, except for sending the MIB and the SIB1, the network device sends other SIBs on demand. That is, when the terminal needs other SIBs, the terminal sends a system information (SI) request to the network device, and the network device determines whether to broadcast a corresponding SIB after receiving the SI request.

The SI request may include: an SI request based on a message 1 (Msg1) of a random access request and/or an SI request based on a message 3 of the random access request.

In some embodiments, the SI request based on the Msg1 may use a reserved random access preamble and/or random access channel (RACH) resource.

In some embodiments, the SI request based on the Msg3 does not require the reserved RACH resource and the random access preamble.

The SI request based on the Msg3 may be defined as an RRCSystemInfoRequest message (Msg3).

The terminal learns whether to use the SI request based on the Msg1 or the SI request based on the Msg3 by reading system information.

If the base station provides configuration information of the SI request (e.g., si-Request-Config) in the system information (SIB1), the SI request based on the Msg1 is used; otherwise, the SI request based on the Msg3 is used.

After receiving the SI request, the base station may send SI request acknowledgement to the terminal.

After receiving the SI request acknowledgement, the terminal receives the SI in a current modification period. The terminal receives the SI until the modification period ends or until the SI is received. If the RACH fails during an SI request process, a subsequent behavior of the UE depends on an implementation by the UE.

FIG. 1D shows an information interaction method between a network device and a terminal, including: broadcasting, by the network device, the MIB; broadcasting, by the network device, the SIB1; sending, by the terminal, the SI request; and sending, by the network device, the system information.

In some embodiments, some terminals support network energy saving, and some terminals do not support network energy saving. Terminals that support network energy saving may support different energy saving mechanisms of the network. For example, some terminals support an SSB/SIB-less cell, but do not support an on-demand SSB and/or SIB. In order to enable the terminal to access more types of cells and reduce a situation where it may only enter a small number of types of cells in some cases, the embodiments of the present disclosure provide a cell configuration method.

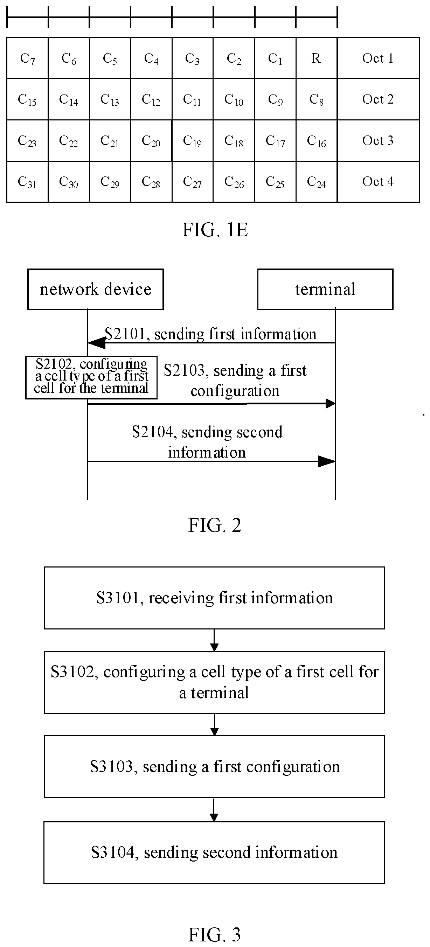

As shown in FIG. 2, the embodiments of the present disclosure provide a DCI transmission method, performed by a communication system. The method may include the following steps at S2101 to S2104.

At S2101, a terminal sends first information to a network device.

In some embodiments, the terminal sends a radio resource control (RRC) message, an MAC layer signaling, or uplink control information (UCI) containing the first information to the network device.

In some embodiments, the first information is used for the network device to determine a capability and/or an expectation of the terminal.

In some embodiments, the first information is used for the network device to determine a cell type of a secondary cell that the terminal supports and/or expects.

In some embodiments, the first information may be used for the network device to directly or indirectly determine the capability of the terminal.

For example, the first information is capability information, which may be used to indicate a cell type supported by the terminal.

In some embodiments, the capability information may specifically include but is not limited to at least one of: first capability information, indicating whether the terminal supports a cell of a first type and/or a second type; second capability information, indicating whether the terminal supports a cell of a first type on one or more frequency bands; third capability information, indicating whether the terminal supports a cell of a second type on one or more frequency bands; fourth capability information, indicating whether the terminal supports a cell of a first type on one or more band combinations and a band combination (BC) may include one or more frequency bands; fifth capability information, indicating whether the terminal supports a cell of a second type on one or more band combinations; sixth capability information, indicating whether the terminal supports a cell of a first type on one or more feature sets, and a feature set (FS) may include but is not limited to a combination of one or more of: a frequency band, a band combination, a carrier component and/or a carrier; sixth capability information, indicating whether the terminal supports a cell of a second type on one or more feature sets, and an FS may include but is not limited to a combination of one or more of: a frequency band, a band combination, a carrier component and/or a carrier; seventh capability information, indicating whether the terminal supports a cell of a first type on one or more carrier components; eighth capability information, indicating whether the terminal supports a cell of a second type on one or more carrier components; ninth capability information, indicating whether the terminal supports a cell of a first type within an intra-frequency range; tenth capability information, indicating whether the terminal supports a cell of a second type within an intra-frequency range; eleventh capability information, indicating whether the terminal supports a cell of a first type within an inter-frequency range; and twelfth capability information, indicating whether the terminal supports a cell of a second type within an inter-frequency range.

In some embodiments, the capability information further indicates at least one of: a cell type supported by the terminal on one or more frequency bands; a cell type supported by the terminal on one or more band combinations; an FS of a cell type supported by the terminal, in which the FS may include but is not limited to a combination of one or more of: a frequency band, a band combination, a carrier component and/or a carrier; a cell type supported by the terminal on one or more carriers; a cell type supported by the terminal on one or more carrier components; a cell type supported by the terminal on an intra-frequency cell; or a cell type supported by the terminal on an inter-frequency cell.

For another example, the first information may be expectation information, which may be used to indicate a cell type that the terminal expects to access or camp on among cell types it supports. In this case, the expectation information implicitly indicates the cell type supported by the terminal.

In some embodiments, the expectation information is used for the terminal to indicate, according to its own working state and/or energy state, the cell type it expects to access or camp on. For example, if the terminal is currently in an idle state by the user, the terminal is in a working state with very low communication requirements, and may indicate to the network device via the expectation information, in combination with the capability of the terminal, that it expects to work in the cell of the first type.

For another example, if the terminal currently has a service to transmit or is expected to have service data to transmit, it indicates that the terminal is in a working state with high communication requirements, and may indicate to the network device via the expectation information, in combination with the capability of the terminal, that it expects to work in the cell of the second type.

For example, if the terminal currently has low power consumption, in order to save power, the terminal may express that it expects to work on the cell of the first type, and expects to provide a reference cell for the the cell of the first type to allow the terminal to monitor the SSB and/or the SIB1, which reduces sending of request information by the terminal to save power consumption of the terminal.

In some embodiments, the first information may include both the capability information and the expectation information. The capability information indicates the cell type supported by the terminal, and the expectation information indicates the cell type that the terminal expects to access or camp on. In this case, if the expectation information indicates that the cell type the terminal expects to access and/or camp on is a cell type not supported by the terminal, the expectation information is invalid.

In some embodiments, the expectation information may include: ordering information of the first type and the second type. For example, the terminal orders the cell types in which it expects to work according to a preference level.

In some embodiments, the expectation information may include: priority information of the first type and the second type. For example, a higher priority indicates a higher preference of the terminal, and vice versa.

In summary, the first information indicates the capability and/or expectation (or willingness) of the terminal.

In some embodiments, the first information may be user assistance information (UAI).

At S2102, the network device configures a cell type of a first cell for the terminal.

In some embodiments, the network device may be an access network device.

In some embodiments, the network device configures the cell type of the first cell for the terminal.

In some embodiments, the network device may configure the same or different cell types of the first cell for terminals with different capabilities.

In some embodiments, the cell type of the first cell configured for the terminal and an actual cell type of the first cell may be the same or different.

In some embodiments, the network device configures the cell type of the first cell for the terminal according to the capability of the terminal and the capability of the first cell.

For example, in some embodiments, the network device configures the cell type of the first cell for the terminal as a cell type supported by both the terminal and the first cell according to the capability of the terminal and the capability of the first cell.

For example, for terminal A that only supports SSB/SIB-less cells, the first cell is actually an on-demand SSB/SIB cell. In this case, the network device of the first cell supports to send an SSB/SIB on demand, and in terms of capability, it also supports the SSB/SIB-less operation. Therefore, in order to ensure the terminal A to access the first cell, the network device may configure the first cell as an SSB/SIB-less cell.

In some embodiments, a first network device of the first cell configures the type of the first cell.

In some embodiments, a first network device of the second cell configures the type of the first cell.

In some embodiments, the second cell may be a neighboring cell of the first cell.

In some embodiments, for a carrier aggregation and/or dual connectivity scenario, the second cell may be a primary cell and the first cell may be a secondary cell; or, the second cell may be a primary secondary cell and the first cell may be a conventional secondary cell.

In some embodiments, the first cell may be a serving cell or a camping cell of the terminal.

In some embodiments, the first cell may be a target cell or a candidate cell that the terminal needs to access or camp on.

In some embodiments, the cell type includes the first type and/or the second type.

In some embodiments, a cell of the first type is a cell that does not send an SSB and/or does not send an SIB. For example, the SSB/SIB-less cell may not transmit the SSB and/or the SIB. For example, the SSB/SIB-less cell may not transmit the SSB and/or the SIB1.

In some embodiments, a cell of the second type is a cell that transmits the SSB and/or the SIB on demand.

Transmitting the SSB and/or the SIB on demand may include but is not limited to at least one of: a cell that transmits the SSB and/or the SIB according to its own demand, for example, when the cell wants to establish downlink synchronization with the terminal or perform downlink connection re-establishment, it may be considered that a demand arises, and thus the cell may actively broadcast the SSB and/or the SIB. The cell transmits the SSB and/or the SIB according to the demand of the terminal, for example, when the terminal needs to obtain the SSB and/or the SIB, the terminal may send a request to the network device, so that the network device will know that the terminal has a demand to obtain the SSB and/or the SIB, and then determine whether to broadcast the SIB.

In some embodiments, the terminal may request the SSB and/or the SIB from a cell that does not periodically send the SIB by sending a wake up signal (WUS).

In some embodiments, the cell type may further include: a third type. A cell of the third type is a cell that periodically transmits the SSB and/or the SIB. The cell of the third type periodically transmits the SSB and/or the SIB according to a semi-static configuration, a periodic configuration, and/or a dynamic configuration.

Assuming that the first cell is a cell that supports to transmit the SSB and/or the SIB on demand, and according to the capability of the terminal, configuring the first cell as the first type or the second type includes at least one of: in a case where the terminal has a first capability and does not have a second capability, configuring the cell type of the first cell as the first type; or in a case where the terminal has a first capability and a second capability, configuring the cell type of the first cell as the first type or the second type.

In some embodiments, the first capability is: a capability to camp on or access the cell of the first type.

In some embodiments, the second capability is: a capability to camp on or access the cell of the second type.

In some embodiments, in the case where the terminal has the first capability and the second capability, configuring the cell type of the first cell as the first type or the second type includes: in the case where the terminal has the first capability and the second capability, configuring the cell type of the first cell as the first type or the second type according to an expectation of the terminal.

In the case where the terminal has the first capability and the second capability, configuring the cell type of the first cell as the first type or the second type according to the expectation of the terminal includes at least one of: in a case where the terminal has the first capability and the second capability and the terminal expects to access or camp on the cell of the first type, configuring the cell type of the first cell as the first type; in a case where the terminal has the first capability and the second capability and the terminal expects to access or camp on the cell of the second type, configuring the cell type of the first cell as the second type; or in a case where the terminal supports the cell of the first type and supports the cell of the second type and the terminal expects to access or camp on the cell of the first type or the cell of the second type, configuring the cell type of the first cell as the first type or the second type according to a network configuration.

In some embodiments, the network configuration may include but is not limited to a local configuration of the network device, for example, a configuration of the network device by a communication operator.

In some embodiments, when the terminal supports the cell of the first type and the cell of the second type and the terminal expects to access or camp on the cell of the first type or the cell of the second type, the cell type of the first cell is configured as the first type or the second type according to a network requirement.

For example, if a first cell that currently supports to transmit the SSB and/or the SIB on demand has a heavy load, for the terminal that supports to transmit the SSB and/or the SIB on demand, the first cell may also be configured as the first type instead of the second type.

In some embodiments, if the first cell currently supports to transmit the SSB and/or the SIB on demand, i.e., the first cell supports to act as the first type and the second type, but may not support to act as the third type. Therefore, in this case, if the terminal does not support to transmit the SSB and/or the SIB on demand, does not support to transmit the SSB/SIB1 on demand, and does not support SSB/SIB-less, i.e., the terminal only supports to periodically transmit the SSB and/or the SIB, an access and/or camping of such a terminal may be prohibited considering network energy saving.

At S2103, the network device sends a first configuration to the terminal.

In some embodiments, the network device sends the first configuration to the terminal according to the cell type of the first cell.

In some embodiments, the first network device sends the first configuration to the terminal according to the cell type of the first cell.

In some embodiments, the second network device sends the first configuration to the terminal according to the cell type of the first cell.

In some embodiments, the cell type of the first cell is the first type, and the first configuration includes at least one of: a reference cell configuration, indicating a second cell referenced by the first cell; or a reference signal configuration, used by the terminal to determine timing of the first cell.

For example, a first cell of the first type may not transmit the SSB and/or the SIB, so the terminal may discover the first cell based on an SSB sent by a reference cell on behalf of the first cell.

For another example, the first cell of the first type may not transmit the SIB, and the terminal may receive, on the reference cell, the SIB sent by the reference cell on behalf of the first cell.

In some embodiments, the reference signal configuration may be used to configure a reference signal for the terminal to obtain timing of the first cell. For example, the reference signal may include but is not limited to: a tracking reference signal. Based on the timing, the terminal may maintain synchronization with the first cell.

In other embodiments, the reference signal configuration may not be limited to the reference signal for configuring the timing of the first cell. For example, the reference signal may also include but is not limited to a channel state information reference signal.

In some embodiments, the cell type of the first cell is the second type, and the first configuration includes: a request configuration, used by the terminal to request the SSB and/or the SIB from the first cell.

The request configuration may include a configuration parameter such as a resource configuration of a first request and/or a second request.

In some embodiments, the request may be an SI request based on an Msg1 or an SI request based on an Msg3.

In other embodiments, if based on the SI request of the Msg1, the request configuration may include: information of a first random access preamble, in which the first random access preamble is used by the terminal to request the SSB and/or the SIB based on a random access request message.

In some embodiments, the information of the first random access preamble may include but is not limited to an index of the first random access preamble, or a generation algorithm, etc. For example, a length of the first random access preamble used to request the SSB and/or the SIB is different from a length of a second random access preamble used when the terminal accesses due to a service request, and their algorithms used are also different. In this case, the information of the first random access preamble may also be information indicating the length of the first random access preamble.

The first random access preamble is equivalent to a reserved random access preamble for triggering the first cell to send the SSB and/or the SIB.

In some embodiments, there may be one or more first random access preambles.

In some embodiments, when there are more than one first random access preambles, the SSB and the SIB may correspond to different first random access preambles.

In some embodiments, when there are more than one first random access preambles, different SIBs may correspond to different first random access preambles.

At S2104, the network device sends second information to the terminal.

In some embodiments, the second information is used for a change of the cell type of the first cell configured for the terminal.

In some embodiments, when the network device changes the cell type of the first cell configured for the terminal or when an actual cell type of the first cell changes, the network device may send the second information to the terminal.

For example, the first cell supports the on-demand SSB/SIB and SSB/SIB-less. If the current cell type of the first cell is the SSB/SIB-less and the first cell receives that the reference cell of the first cell does not continue to send the SSB and/or the SIB on behalf of the first cell, the actual cell type of the first cell may switch to the second type, and the network device may send a change of the cell type of the second cell from the first type to the second type to the terminal.

In some embodiments, the second information includes at least one of: a first instruction, indicating the change of the cell type of the first cell; or a second configuration, in which the second configuration is a configuration of the first cell after the change of the cell type.

For example, the cell type of the first cell configured for the terminal may be switched between the first type and the second type.

For example, the second information may indicate that the cell type of the first cell configured for the terminal may be changed from the first type to the second type.

For another example, the second information may indicate that the cell type of the first cell configured for the terminal may be changed from the second type to the first type.

In some embodiments, the first instruction may be any instruction sent by the network device. For example, the first instruction may be a layer 1 (L1) instruction and/or an L2 instruction.

In some embodiments, the first instruction may be: DCI.

In some embodiments, the DCI may indicate, via one or more bits, a type change of the first cell configured for the terminal.

In some embodiments, two bit values of one bit in the first instruction represent change or no change, respectively.

In some embodiments, the first instruction is sent only when the cell type of the first cell configured for the terminal needs to be changed, and when the terminal receives the first instruction, it is considered that the cell type of the first cell configured for the terminal by the network device is changed.

In some embodiments, terminals are divided into two terminal groups according to whether the terminals support on-demand transmission of the SSB and/or the SIB. All terminals in one terminal group do not support on-demand transmission of the SSB and/or the SIB but support the SSB/SIB1-less. All terminals in the other terminal group support on-demand transmission of the SSB and/or the SIB and support the SSB/SIB1-less.

In some embodiments, the DCI may be group DCI, so that the network device of the first cell may, by sending the group DCI, make all terminals in the terminal group aware of the change of the cell type configured for the terminals by the network device. For example, assuming that before the change, the cell type of the first cell configured by the network device for the terminal is the first type, after receiving the group DCI indicating the change, it may be considered that the cell type of the first cell configured by the network device for the terminal is changed from the first type to the second type.

In some embodiments, the DCI may be a dedicated DCI, which may indicate to a single terminal the change of the cell type of the first cell configured for the single terminal by the network device. Thus, assuming that before the change, the cell type of the first cell configured by the network device for the terminal is the first type, after receiving the dedicated DCI indicating the change, it may be considered that the cell type of the first cell configured by the network device for the terminal is changed from the first type to the second type.

In some embodiments, the first instruction may be a first MAC CE.

For example, the first MAC CE may include a bitmap; and a bit in the bitmap indicates a change of a cell type of a cell. For example, the first MAC CE may include the bitmap, and the bit in the bitmap may indicate a change of a cell type of a secondary cell of the terminal.

For example, the first MAC CE may include the bitmap, and the bit in the bitmap may indicate the cell type of the cell. Thus, after receiving a current first MAC CE, the terminal compares the current first MAC CE with a previously received first MAC CE, and if a value of an indicating bit is changed, it indicates that the cell type of the first cell configured by the network device for the terminal is changed.

FIG. 1E is a schematic diagram of the first MAC CE. The first MAC CE shown in FIG. 1E includes 4 octets (Octs), namely Oct1, Oct2, Oct3, and Oct4. Each octet includes 8 bits. A bit may indicate the change of the cell type or a changed cell type.

In some embodiments, the first MAC CE has a first logical channel identifier; the first logical channel identifier is different from a second logical channel identifier of a second MAC CE; and the second MAC CE is different from the first MAC CE.

For example, the second MAC CE may be an MAC CE indicating activation of a secondary cell.

For another example, the second MAC CE may be an MAC CE indicating activation or deactivation of a semi-persistent scheduling resource.

In short, the second MAC CE may be various types of MAC CEs in the related art.

In the embodiments of the present disclosure, in order to facilitate the terminal to distinguish MAC CEs with different functions, a dedicated first logical channel identifier is set for the first MAC CE. Thus, the terminal may determine whether a currently received MAC CE is the first MAC CE according to different logical channel identities.

In some embodiments, the MAC CE indicating the change of the cell type of the first cell configured for the terminal by the network device may be an MAC CE with remaining bits in the related art. In this case, the network device does not need to design a dedicated first logical channel identifier.

In some embodiments, the second configuration after the change of the cell type of the first cell may be sent together with the first instruction to the terminal, or the first instruction and the second configuration may be sent separately using different network messages.

In other embodiments, when the network device sends a cell configuration of the first cell for the first time, the network device may send two types of cell configurations of the first cell (i.e., the first type and the second type) to the terminal. Subsequently, when the cell type of the first cell configured by the network device for the terminal changes, the terminal directly uses a corresponding cell configuration according to a changed cell type, so that the network device does not need to temporarily send the cell configuration after the change of the cell type when the cell type of the first cell configured for the terminal changes.

In some embodiments, the second information includes the second configuration.

Since the cell type of the first cell configured for the terminal changes, the cell configuration of the first cell also changes. In this case, the second information directly carries the second configuration of the cell type after the change of the first cell. On the one hand, the terminal will know the change of the cell type, and at the same time, know the cell configuration after the change of the cell type.

When the second information includes the second configuration, the second information may or may not include the first instruction.

It is worth noting that if the cell type of the first cell is not changed, S2104 may be omitted. If the capability of the terminal may be determined according to the type of the terminal, or the access network device may request the capability of the terminal from the core network device according to the identification information of the terminal, S2101 may be omitted.

As shown in FIG. 3, the embodiments of the present disclosure provide a cell configuration method, performed by a network device. The method may include the following steps at S3101 to S3104.

At S3101, first information is received.

In some embodiments, a description of the network device and the first information may refer to the corresponding embodiments of FIG. 2.

At S3102, a cell type of a first cell is configured for a terminal.

In some embodiments, optional implementations of S3102 may refer to S2102 of the corresponding embodiments of FIG. 2.

At S3103, a first configuration is sent.

In some embodiments, optional implementations of S3103 may refer to S2103 of the corresponding embodiments of FIG. 2.

At S3104, second information is sent.

In some embodiments, optional implementations of S3104 may refer to S2104 of the corresponding embodiments of FIG. 2.

It is worth noting that, if the cell type of the first cell is changed, S3104 may be omitted. If the capability of the terminal may be determined according to the type of the terminal, or the access network device may request the capability of the terminal from the core network device according to the identification information of the terminal, S3101 may be omitted.

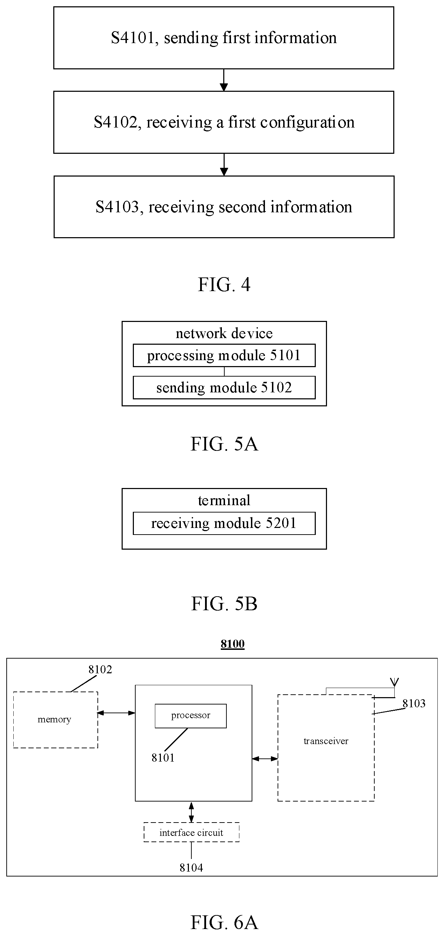

As shown in FIG. 4, the embodiments of the present disclosure provide a cell configuration method, performed by a terminal. The method may include the following steps at S4101 to S4103.

At S4101, first information is sent.

In some embodiments, optional implementations of S4101 may refer to S2103 of the corresponding embodiments of FIG. 2.

At S4102, a first configuration is received.

In some embodiments, optional implementations of the first configuration may refer to the corresponding embodiments of FIG. 2.

At S4103, second information is received.

In some embodiments, optional implementations of the second information may refer to the corresponding embodiments of FIG. 2.

It is worth noting that, if the cell type of the first cell is not changed, S4103 may be omitted. If the capability of the terminal may be determined according to the type of the terminal, or the access network device may request the capability of the terminal from the core network device according to the identification information of the terminal, S4101 may be omitted.

The embodiments of the present disclosure provide that based on the UAI provided by the terminal, the network side determines whether to configure an SSB-less secondary cell (SCell) or an on-demand SSB SCell for the terminal, or determines which working mode to adopt depending on terminal implementations, so as to increase flexibility of the terminal implementations, and the embodiments also provide that the network side dynamically switches the cell type configured for the terminal based on the MAC CE or DCI to meet flexibility of a network operation.

First, the terminal may report the capability of the terminal to support the cell type. For example, the terminal reports, in an on-demand SSB cell, a terminal capability of supporting inter-band SSB-less and/or intra-band SSB-less.

The capability of the terminal may be reported per band, per terminal, per BC, or per FS.

For example, for a terminal that only supports a capability of an inter-band SSB-less SCell, and/or supports an intra-band SSB-less SCell, the network side may configure a cell that supports the on-demand SSB as an SSB-less cell. The operation of configuring the on-demand SSB cell as the SSB-less cell may be referred to as an SSB-less operation. If an SCell of the terminal that is actually an on-demand SSB is configured as an SSB-less SCell, the operation of the network device may be referred to as an SSB-less SCell operation.

The SSB-less SCell operation may be regarded as a fallback of the on-demand SSB SCell. That is, the on-demand SSB SCell may be configured as the on-demand SSB SCell or the SSB-less SCell.

The terminal indicates, in an uplink RRC message, assistance information indicating whether the terminal prefers (i.e., expects or wishes) to work in the on-demand SSB SCell or the SSB-less SCell. For example, an enumerated type field indicating an operation form, and an enumerated value may be: the on-demand SSB SCell operation, or the SSB-less SCell operation, or both. The assistance information may be a priority or order of a cell type that the terminal may or expects to work in.

Before the terminal reports, the network configures whether the terminal may report a request or assistance information.

After the terminal reports, the network configures for terminal that the cell type for a certain SCell may be: the on-demand SSB SCell, the SSB-less SCell, or both. If the cell type is both the on-demand SSB SCell and the SSB-less SCell, a working mode to adopt depends on a terminal implementation.

The network side configures a working mode of a target SCell for the terminal and configuration parameters corresponding to the working mode, for example, an on-demand SSB SCell operation and an SSB-less SCell operation, and further, an RRC message notifies an initial working mode configured by the network side, which is either the on-demand SSB SCell operation or the SSB-less SCell operation.

Parameters related to the SSB-less SCell operation may include but are not limited to: a reference cell configuration, and/or a tracking reference signal (TRS) configuration, etc.

Configuration parameters related to the on-demand SSB SCell may include but are not limited to: configuration parameters for requesting an SSB, for example, a preamble index of a specially designated random access preamble.

The network side may dynamically indicate, via the DCI or the MAC CE, whether the target SCell operates as an on-demand SSB SCell or an SSB-less SCell.

A format of the MAC CE may be as follows: a new logical channel identifier (LCID) or enhanced logical channel identifier (eLCID) is defined to identify this MAC CE.

The i-th bit in the bitmap corresponds to the i-th secondary cell. For example, Ci corresponds to a cell index of the secondary cell. The value of Ci, for example, a bit value of "0" indicates that the cell operate as an on-demand SSB SCell, whereas a bit value of "1" indicates that the cell operate as an SSB-less SCell.

The advantage of this dynamic switching is that it increases flexibility on the network side, and also facilitates dynamic closing of SSB transmission in future 5G and 6G dynamic spectrum sharing, without allowing a terminal request, to meet 6G data transmission and reception, avoid 5G interference to 6G, and better achieve dynamic spectrum sharing between 5G and 6G.

Based on terminal capability reporting, a operation mode of the SCell is configured as either an on-demand SSB SCell or an SSB-less SCell.

Based on the assistance information reported by the terminal or a preferred operation mode of the SCell, the SCell is configured to operate as an on-demand SSB SCell or an SSB-less SCell.

Based on the DCI/MAC CE, an operation mode is dynamically switched between an on-demand SSB SCell and an SSB-less SCell.

In the embodiments of the present disclosure, some or all steps and optional implementations thereof may be arbitrarily combined with some or all steps in other embodiments, and may also be arbitrarily combined with optional implementations of other embodiments.

In the embodiments of the present disclosure, some or all steps and optional implementations thereof may be arbitrarily combined with some or all steps in other embodiments, and may also be arbitrarily combined with optional implementations of other embodiments.

The embodiments of the present disclosure also provide an apparatus for implementing any one of the above methods. For example, an apparatus is provided, including units or modules for implementing the steps performed by the terminal in any one of the above methods. For another example, another apparatus is provided, including units or modules for implementing the steps performed by the network device (e.g., an access network device, or a core network device, etc.) in any one of the above methods.

It should be understood that the division of units or modules in the above apparatuses is merely a division of logical functions. In actual implementations, the units or modules may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units or modules are realized by designing logical relationships among components in the circuit. For another example, in another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in the form of the hardware circuit, or partially implemented in the form of software called by the processor and the remaining part implemented in the form of the hardware circuit.

In the embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigurable. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or modules. In addition, the hardware circuit may be designed specifically for artificial intelligence and may be understood as an ASIC, such as a neural network processing unit (NPU), a tensor processing unit (TPU), or deep learning processing unit (DPU).

As shown in FIG. 5A, the embodiments of the present disclosure provide a network device, including: a processing module 5101, configured to configure, according to a capability of a terminal, a cell type of a first cell for the terminal, in which the cell type of the first cell configured for the terminal includes a first type or a second type; a cell of the first type is a cell that does not send an SSB and/or does not send an SIB; and a cell of the second type is a cell that sends the SSB and/or the SIB on demand; and a sending module 5102, configured to send, according to the cell type of the first cell configured for the terminal, a first configuration of the first cell to the terminal.

In some embodiments, the network device may further include: a receiving module.

In some embodiments, the sending module and/or the receiving module may correspond to a network interface and/or a transceiver antenna of the network device.

In some embodiments, the processing module may be configured to perform any step related to information processing in the cell configuration method performed by the network device.

In some embodiments, the processing module is configured to perform at least one of: in a case where the terminal has a first capability and does not have a second capability, configuring the cell type of the first cell as the first type, in which the first capability is a capability to camp on or access the cell of the first type; and the second capability is a capability to camp on or access the cell of the second type; or in a case where the terminal has a first capability and a second capability, configuring the cell type of the first cell as the first type or the second type.

In some embodiments, the processing module is configured to, in the case where the terminal has the first capability and the second capability, configure the cell type of the first cell as the first type or the second type according to an expectation of the terminal.

In some embodiments, the processing module is configured to perform at least one of: in a case where the terminal has the first capability and the second capability and the terminal expects to access or camp on the cell of the first type, configuring the cell type of the first cell as the first type; in a case where the terminal has the first capability and the second capability and the terminal expects to access or camp on the cell of the second type, configuring the cell type of the first cell as the second type; or in a case where the terminal supports the cell of the first type and supports the cell of the second type and the terminal expects to access or camp on the cell of the first type or the cell of the second type, configuring the cell type of the first cell as the first type or the second type according to a network configuration.

In some embodiments, the sending module is configured to send second information to the terminal, in which the second information is used for a change of the cell type of the first cell configured for the terminal.

In some embodiments, the second information includes at least one of: a first instruction, indicating the change of the cell type of the first cell; or a second configuration, in which the second configuration is a configuration of the first cell after the change of the cell type.

In some embodiments, the first instruction is: DCI or a first MAC CE.

In some embodiments, the first MAC CE includes a bitmap; and a bit in the bitmap indicates a change of a cell type of a cell.

In some embodiments, the first MAC CE has a first logical channel identifier; the first logical channel identifier is different from a second logical channel identifier of a second MAC CE; and the second MAC CE is different from the first MAC CE.

In some embodiments, the cell type of the first cell is the first type, and the first configuration includes at least one of: a reference cell configuration, indicating a second cell referenced by the first cell; or a reference signal configuration, used by the terminal to determine timing of the first cell.

In some embodiments, the cell type of the first cell is the second type, and the first configuration includes: a request configuration, used by the terminal to request the SSB and/or the SIB from the first cell.

In some embodiments, the request configuration includes: information of a first random access preamble, in which the first random access preamble is used by the terminal to request the SSB and/or the SIB based on a random access request message.

As shown in FIG. 5B, the embodiments of the present disclosure provide a terminal, including: a receiving module 5201, configured to receive a first configuration sent by a network device, in which the first configuration is configured by the network device for the terminal according to a cell type of a first cell; the cell type of the first cell is configured according to a capability of the terminal; the cell type of the first cell configured for the terminal includes a first type or a second type; a cell of the first type is a cell that does not send an SSB and/or does not send an SIB; and a cell of the second type is a cell that sends the SSB and/or the SIB on demand.

In some embodiments, the terminal may further include: a sending module and/or a processing module.

In some embodiments, the sending module and/or the receiving module may correspond to a network interface and/or a transceiver antenna of the terminal.

In some embodiments, the processing module may be used for the terminal to perform steps related to information processing in any cell configuration method.

In some embodiments, the sending module may be used for the terminal to perform steps related to information sending in any cell configuration method.

In some embodiments, the receiving module may be used for the terminal to perform steps related to information sending in any cell configuration method.

In some embodiments, in a case where the terminal has a first capability and does not have a second capability, configuring the cell type of the first cell as the first type, in which the first capability is a capability to camp on or access the cell of the first type; and the second capability is a capability to camp on or access the cell of the second type. In some embodiments, in a case where the terminal has a first capability and a second capability, the cell type of the first cell is configured according to an expectation of the terminal.

In some embodiments, in a case where the terminal has the first capability and the second capability and the terminal expects to access or camp on the cell of the first type, the cell type of the first cell is the first type; in a case where the terminal has the first capability and the second capability and the terminal expects to access or camp on the cell of the second type, the cell type of the first cell is the second type; or in a case where the terminal has the first capability and the second capability and the terminal expects to access or camp on the cell of the first type or the cell of the second type, the cell type of the first cell is the first type or the second type.

In some embodiments, the sending module is configured to send first information to the network device, in which the first information indicates the capability of the terminal and/or an expectation of the terminal.

In some embodiments, the receiving module is configured to receive second information sent by the network device, in which the second information indicates the capability of the terminal and/or an expectation of the terminal.

In some embodiments, the second information includes at least one of: a first instruction, indicating a change of the cell type of the first cell; or a second configuration, in which the second configuration is a configuration of the first cell after a change of the cell type.

In some embodiments, the first instruction is: DCI or a first MAC CE.

In some embodiments, the first MAC CE includes a bitmap; and a bit in the bitmap indicates a change of a cell type of a cell.

In some embodiments, the first MAC CE has a first logical channel identifier; the first logical channel identifier is different from a second logical channel identifier of a second MAC CE; and the second MAC CE is different from the first MAC CE.

In some embodiments, the cell type of the first cell is the first type, and the first configuration includes at least one of: a reference cell configuration, used to indicate a second cell referenced by the first cell; or a reference signal configuration, used for the terminal to determine timing of the first cell.

In some embodiments, the cell type of the first cell is the second type, and the first configuration includes: a request configuration, used by the terminal to request the SSB and/or the SIB from the first cell.

In some embodiments, the request configuration includes: information of a first random access preamble, in which the first random access preamble is used by the terminal to request the SSB and/or the SIB based on a random access request message.

The embodiments of the present disclosure further provide a communication device, including: one or more processors, in which the processor is configured to invoke instructions to cause the communication device to perform the cell configuration method that may be implemented in any one of the above embodiments.

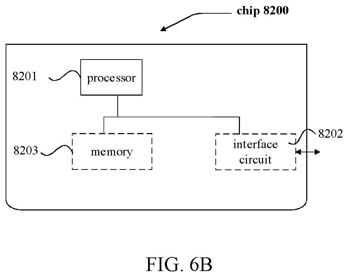

In some embodiments, as shown in FIG. 6A and/or FIG. 6B, the communication device 8100 further includes one or more memories 8102 for storing instructions. Optionally, all or part of the one or more memories 8102 may also be outside the communication device 8100.

The communication device may be the above terminal or the above network device. In some embodiments, the network device may be a master node and/or a secondary node.

In some embodiments, the communication device 8100 further includes one or more transceivers 8103. When the communication device 8100 includes one or more transceivers 8103, communication steps such as sending and receiving in the above method are performed by the transceiver 8103, and other steps are performed by a processor 8101.

In some embodiments, the transceiver may include a receiver and a transmitter, which may be separate or integrated. Optionally, the terms such as transceiver, transceiver unit, transceiver machine, transceiver circuit, etc. may be used interchangeably; the terms such as transmitter, transmitting unit, transmitter machine, transmitting circuit, etc. may be used interchangeably; and the terms such as receiver, receiving unit, receiver machine, receiving circuit, etc. may be used interchangeably.

Optionally, the communication device 8100 further includes one or more interface circuits 8104, the interface circuit 8104 is connected to the memory 8102, and the interface circuit 8104 may be used to receive a signal from the memory 8102 or another device, and may be used to send the signal to the memory 8102 or another device. For example, the interface circuit 8104 may read instructions stored in the memory 8102 and send the instructions to the processor 8101.

The communication device 8100 in the description of the above embodiments may be a network device or a terminal, but the scope of the communication device 8100 described in the disclosure is not limited thereto, and the structure of the communication device 8100 may not be limited by FIG. 6A. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 6B is a block diagram illustrating a chip 8200 according to an exemplary embodiment. For the case where the communication device 8100 is a chip or a chip system, reference may be made to the block diagram of the chip 8200 shown in FIG. 6B, which is not limited herein.

The chip 8200 includes one or more processors 8201, and the processor 8201 is configured to invoke the instructions to cause the chip 8200 to perform any one of cell configuration methods.

In some embodiments, the chip 8200 further includes one or more interface circuits 8202, the interface circuit 8202 is connected to a memory 8203, and the interface circuit 8202 may be used to receive a signal from the memory 8203 or another device, and may be used to send the signal to the memory 8203 or another device. For example, the interface circuit 8202 may read the instructions stored in the memory 8203 and send the instructions to the processor 8201. Optionally, terms such as interface circuit, interface, transceiver pin, transceiver may be used interchangeably.

In some embodiments, the chip 8200 further includes one or more memories 8203 for storing instructions. Optionally, all or part of the one or more memories 8203 may be outside the chip 8200.

The present disclosure also provides a storage medium for storing instructions that, when running on a communication device 8100, cause the communication device 8100 to perform any one of the above methods. Optionally, the storage medium is an electronic storage medium. Optionally, the storage medium is a computer-readable storage medium, but may also be a storage medium readable by other devices. Optionally, the storage medium may be a non-transitory storage medium, but may also be a transitory storage medium.

The present disclosure also provides a program product that, when executed by the communication device 8100, causes the communication device 8100 to perform any one of cell configuration methods. Optionally, the program product is a computer program product.

The present disclosure also provides a computer program that, when running on a computer, causes the computer to perform any one of cell configuration methods.

Other embodiments of the present disclosure will be apparent to those skilled in the art from consideration of the specification and practice of the present disclosure disclosed here. This application is expected to cover any variations, uses, or adaptations of the embodiments of the present disclosure, which follow the general principles of the embodiments of the present disclosure and include common knowledge or conventional technical means in the related art not disclosed in the present disclosure. It is expected that the specification and examples be considered as exemplary only, with a true scope and spirit of the present disclosure being indicated by the following claims.

It will be appreciated that the present disclosure is not limited to the exaction construction that has been described above and illustrated in the accompanying drawings, and that various modifications and changes may be made without departing from the scope of the disclosure. It is expected that the scope of the present disclosure is only limited by the appended claims.

## Claims

1. A cell configuration method, performed by a network device, comprising:
configuring, according to a capability of a terminal, a cell type of a first cell for the terminal, wherein the cell type of the first cell configured for the terminal comprises a first type or a second type; a cell of the first type is a cell that does not send a synchronization signal block (SSB) and/or does not send a system information block (SIB); and a cell of the second type is a cell that sends the SSB and/or the SIB on demand; and
sending, according to the cell type of the first cell configured for the terminal, a first configuration of the first cell to the terminal.

2. The method of claim 1, wherein configuring, according to the capability of the terminal, the cell type of the first cell for the terminal comprises at least one of:
in a case where the terminal has a first capability and does not have a second capability, configuring the cell type of the first cell as the first type, wherein the first capability is a capability to camp on or access the cell of the first type; and the second capability is a capability to camp on or access the cell of the second type; or
in a case where the terminal has a first capability and a second capability, configuring the cell type of the first cell as the first type or the second type.

3. The method of claim 2, wherein in the case where the terminal has the first capability and the second capability, configuring the cell type of the first cell as the first type or the second type comprises:
in the case where the terminal has the first capability and the second capability, configuring the cell type of the first cell as the first type or the second type according to an expectation of the terminal.

4. The method of claim 3, wherein in the case where the terminal has the first capability and the second capability, configuring the cell type of the first cell as the first type or the second type according to the expectation of the terminal comprises at least one of:
in a case where the terminal has the first capability and the second capability and the terminal expects to access or camp on the cell of the first type, configuring the cell type of the first cell as the first type;
in a case where the terminal has the first capability and the second capability and the terminal expects to access or camp on the cell of the second type, configuring the cell type of the first cell as the second type; or
in a case where the terminal supports the cell of the first type and supports the cell of the second type and the terminal expects to access or camp on the cell of the first type or the cell of the second type, configuring the cell type of the first cell as the first type or the second type according to a network configuration.

5. The method of any one of claims 1 to 4, further comprising:
receiving first information sent by the terminal, wherein the first information indicates the capability of the terminal and/or an expectation of the terminal.

6. The method of any one of claims 1 to 5, further comprising:
sending second information to the terminal, wherein the second information is used for a change of the cell type of the first cell configured for the terminal.

7. The method of claim 6, wherein the second information comprises at least one of:
a first instruction, indicating the change of the cell type of the first cell; or
a second configuration, wherein the second configuration is a configuration of the first cell after the change of the cell type.

8. The method of claim 7, wherein the first instruction is: downlink control information (DCI) or a first medium access control (MAC) control element (CE).

9. The method of claim 8, wherein the first MAC CE comprises a bitmap; and a bit in the bitmap indicates a change of a cell type of a cell.

10. The method of claim 8 or 9, wherein the first MAC CE has a first logical channel identifier; the first logical channel identifier is different from a second logical channel identifier of a second MAC CE; and the second MAC CE is different from the first MAC CE.

11. The method of any one of claims 1 to 10, wherein the cell type of the first cell is the first type, and the first configuration comprises at least one of:
a reference cell configuration, indicating a second cell referenced by the first cell; or
a reference signal configuration, used by the terminal to determine timing of the first cell.

12. The method of any one of claims 1 to 10, wherein the cell type of the first cell is the second type, and the first configuration comprises:
a request configuration, used by the terminal to request the SSB and/or the SIB from the first cell.

13. The method of claim 12, wherein the request configuration comprises: information of a first random access preamble, wherein the first random access preamble is used by the terminal to request the SSB and/or the SIB based on a random access request message.

14. A cell configuration method, performed by a terminal, comprising:
receiving a first configuration sent by a network device, wherein the first configuration is configured by the network device for the terminal according to a cell type of a first cell; the cell type of the first cell is configured according to a capability of the terminal; the cell type of the first cell configured for the terminal comprises a first type or a second type; a cell of the first type is a cell that does not send a synchronization signal block (SSB) and/or does not send a system information block (SIB); and a cell of the second type is a cell that sends the SSB and/or the SIB on demand.

15. The method of claim 14, wherein
in a case where the terminal has a first capability and does not have a second capability, the cell type of the first cell is the first type; or
in a case where the terminal has a first capability and does not have a second capability, the cell type of the first cell is the first type or the second type,
wherein the first capability is a capability to camp on or access the cell of the first type; and the second capability is a capability to camp on or access the cell of the second type.

16. The method of claim 15, wherein in the case where the terminal has the first capability and does not have the second capability, the cell type of the first cell is configured according to an expectation of the terminal.

17. The method of claim 16, wherein
in a case where the terminal has the first capability and the second capability and the terminal expects to access or camp on the cell of the first type, the cell type of the first cell is the first type;
in a case where the terminal has the first capability and the second capability and the terminal expects to access or camp on the cell of the second type, the cell type of the first cell is the second type; or
in a case where the terminal has the first capability and the second capability and the terminal expects to access or camp on the cell of the first type or the cell of the second type, the cell type of the first cell is the first type or the second type.

18. The method of any one of claims 14 to 17, further comprising:
sending first information to the network device, wherein the first information indicates the capability of the terminal and/or an expectation of the terminal.

19. The method of any one of claims 14 to 18, further comprising:
receiving second information sent by the network device, wherein the second information indicates the capability of the terminal and/or an expectation of the terminal.

20. The method of claim 19, wherein the second information comprises at least one of:
a first instruction, indicating a change of the cell type of the first cell; or
a second configuration, wherein the second configuration is a configuration of the first cell after a change of the cell type.

21. The method of claim 20, wherein the first instruction is: downlink control information (DCI) or a first medium access control (MAC) control element (CE).

22. The method of claim 21, wherein the first MAC CE comprises a bitmap; and a bit in the bitmap indicates a change of a cell type of a cell.

23. The method of claim 20 or 21, wherein the first MAC CE has a first logical channel identifier; the first logical channel identifier is different from a second logical channel identifier of a second MAC CE; and the second MAC CE is different from the first MAC CE.

24. The method of any one of claims 14 to 23, wherein the cell type of the first cell is the first type, and the first configuration comprises at least one of:
a reference cell configuration, indicating a second cell referenced by the first cell; or
a reference signal configuration, used by the terminal to determine timing of the first cell.

25. The method of any one of claims 14 to 23, wherein the cell type of the first cell is the second type, and the first configuration comprises: a request configuration, used by the terminal to request the SSB and/or the SIB from the first cell.

26. The method of claim 25, wherein the request configuration comprises: information of a first random access preamble, wherein the first random access preamble is used by the terminal to request the SSB and/or the SIB based on a random access request message.

27. A network device, comprising:
a processing module, configured to configure, according to a capability of a terminal, a cell type of a first cell for the terminal, wherein the cell type of the first cell configured for the terminal comprises a first type or a second type; a cell of the first type is a cell that does not send a synchronization signal block (SSB) and/or does not send a system information block (SIB); and a cell of the second type is a cell that sends the SSB and/or the SIB on demand; and
a sending module, configured to send, according to the cell type of the first cell configured for the terminal, a first configuration of the first cell to the terminal.

28. A terminal, comprising:
a receiving module, configured to receive a first configuration sent by a network device, wherein the first configuration is configured by the network device for the terminal according to a cell type of a first cell; the cell type of the first cell is configured according to a capability of the terminal; the cell type of the first cell configured for the terminal comprises a first type or a second type; a cell of the first type is a cell that does not send a synchronization signal block (SSB) and/or does not send a system information block (SIB); and a cell of the second type is a cell that sends the SSB and/or the SIB on demand.

29. A communication device, comprising:
one or more processors,
wherein the one or more processors are configured to invoke instructions to cause the communication device to perform the method of any one of claims 1 to 13 and/or any one of claims 14 to 26.

30. A storage medium for storing instructions that, when executed on a communication device, cause the communication device to perform the method of any one of claims 1 to 13 and/or any one of claims 14 to 26.
